# EUROPÄISCHE PATENTSCHRIFT

(11) **EP 3 337 866 B1**
(45) Veröffentlichungstag und Bekanntmachung des Hinweises auf die Patenterteilung: **05.01.2022**
(21) Anmeldenummer: 16756996.1
(22) Anmeldetag: 18.08.2016
(51) Int. Cl.: C09J 5/02

(54) **PRIMERLÖSUNG ZUR VERBESSERUNG DER ADHÄSION VON KLEBEBÄNDERN AUF HYDROPHILEN OBERFLÄCHEN BEI FEUCHTEN UND NASSEN BEDINGUNGEN**
PRIMER SOLUTION FOR IMPROVING THE ADHESION OF ADHESIVE STRIPS ON HYDROPHILIC SURFACES IN MOIST AND WET CONDITIONS
SOLUTION D'APPRÊT POUR AMÉLIORER L'ADHÉSION DE BANDES ADHÉSIVES À DES SURFACES HYDROPHILES DANS DES CONDITIONS HUMIDES ET MOUILLÉES

(30) Priorität: 20.08.2015 DE 102015215879
(43) Veröffentlichungstag der Anmeldung: 27.06.2018
(73) Patentinhaber: tesa SE, 22848 Norderstedt (DE)
(72) Erfinder: DIETZE, Sebastian, 22307 Hamburg (DE); SCHÜMANN, Uwe, 25421 Pinneberg (DE); ALTENWEGNER, Tanja, 20251 Hamburg (DE); SEIBEL, Eugenia, 21217 Seevetal (DE)
(74) Vertreter: tesa SE
(86) Internationale Anmeldenummer: PCT/EP2016/069559
(87) Internationale Veröffentlichungsnummer: WO 2017/029345

(56) Entgegenhaltungen:
- EP-A1- 1 659 160
- WO-A1-2005/040296
- DE-A1-102009 007 930

## Beschreibung

Die Erfindung betrifft eine Lösung und dessen Verwendung zur Vorbehandlung eines hydrophilen Untergrunds wie Glas, um die Haftung eines Klebemittels auf diesem Untergrund bei feuchten und nassen Bedingungen zu verbessern.

Für die Verklebung leichter Gegenstände im Haushalt werden häufig Klebebänder, Schmelzkleber oder Reaktivkleber verwendet. Da die Halteleistung auf festen Untergründen gegenüber spaltbaren Untergründen erhöht ist, wird, wenn möglich, auf Metall, Keramikfliesen oder Glas verklebt. Neben der Verwendung im Haushalt werden Klebemittel zur Verklebung von Glas, Metall etc. auch in der industriellen Produktion eingesetzt.

Die Oberflächen Keramik und Glas haben gemeinsam, dass sie als hydrophil eingestuft werden können. Hydrophile Untergründe besitzen die Eigenschaft, oftmals eine sehr dünne Schicht adsorbierten Wassers auf der Oberfläche gebunden zu haben, die erst bei sehr hohen Temperaturen entfernt werden kann. Diese Schicht kann besonders bei hoher Luftfeuchtigkeit oder Einwirkung von Wasser weiteres Wasser aufnehmen und dadurch die Verklebungsleistung bis hin zum vollständigen Versagen der Verklebung beeinträchtigen. Die Reaktion von Klebern kann durch Feuchtigkeit inhibiert werden, wenn diese Kleber eine kovalente Bindung mit der Oberfläche ausbilden müssen, um ihre Funktion zu erfüllen. Haftklebstoffe basieren häufig auf Acrylaten, Naturkautschuk oder Styrolblockcopolymeren. Besonders Haftklebstoffe für doppelseitige Klebebänder bestehen zumeist aus Acrylaten oder Styrolblockcopolymeren, wobei die Halteleistung bei den Acrylaten häufig etwas geringer ist. Gerade unter feuchten Bedingungen zeigen diese ein genau gegenläufiges Verhalten, Acrylathaftklebstoffe sind deutlich weniger anfällig gegenüber Nässe und Feuchtigkeit als Blockcopolymermassen.

Auch der Aufbau der Klebebänder trägt zur Empfindlichkeit gegenüber Feuchtigkeit bei, so sind harte Klebstoffe und Klebebänder mit starren Trägern häufig anfälliger als solche mit sehr flexiblen Trägern. Besonders doppelseitige Klebebänder mit Schaumstoffzwischenträger reagieren empfindlich auf Feuchtigkeit, wenn sie auf hydrophilen Untergründen verklebt werden.

Heißschmelzklebstoffe bestehen häufig aus Styrolblockcopolymeren oder aus Ethylenvinylacetat. Beide Arten der Heißschmelzkleber sind anfällig gegenüber Feuchtigkeit.

Industrielle Lösungen für das Problem des mangelhaften Haftuntergrundes sind bekannt. So werden auf Gläser vor einer Verklebung Haftvermittler aufgetragen, die die Oberfläche hydrophobieren und die genannte Wasserschicht damit eliminieren. Für die Hydrophobierung werden Organosilane eingesetzt. Am häufigsten finden dabei solche der

(RO)₃Si-(CH₂)ₙ-X

Verwendung mit R = CH₃ oder C₂H₅,
n = 1 bis 12 und
einer funktionellen Gruppe X.

Nach dem Aufbringen des Silans auf die hydrophile Oberfläche wird eine kovalente Bindung zwischen Oberfläche und Silan ausgebildet. Wenn die Oberfläche vollständig silanisiert wird, ist der oben beschriebene Wasserfilm entfernt und kann auch nicht mehr gebildet werden, so dass das Wasser nicht mehr die Möglichkeit hat, hinter die Verklebung zu laufen.

Dabei gibt es Silane, die mit Kleber und Oberfläche reagieren, und solche, die nur die Oberfläche hydrophobieren, um ein anschließendes Kleben zu erleichtern und den Klebeverbund zu verstärken. Beschrieben ist die Anwendung eines solchen Silans zum Beispiel in der WO 2005/040296 A1, in der ein Silan vor der Verklebung auf einen Haftklebstoff aufgebracht wird. Nach der Verklebung muss noch mindestens 24 Stunden gewartet werden, bis die Endverklebungsfestigkeit erreicht ist.

Weiterhin können diese Silane in reaktive und mäßig reaktive unterteilt werden. Reaktive Silane führen innerhalb von wenigen Minuten zu einer effektiven Hydrophobierung einer Oberfläche, ein Effekt, der mit mäßig reaktiven Silanen erst nach Stunden erreicht wird. Der Vorteil mäßig reaktiver Silane ist allerdings ihre hohe Lagerstabilität von mehr als sechs Monaten in Lösung. In die Gruppe der reaktiven Silane fällt zum Beispiel γ-Aminopropyl-triethoxysilan. 3-Glycidoxypropyltrimethoxysilan ist dahingegen als mäßig reaktiv einzustufen.

In der WO 2005/040296 A1 ist sodann die Anwendung einer Lösung von 3-Glycidoxypropyltrimethoxysilan zur Verbesserung der Verklebung von AcrylatKlebstoffen auf Glasoberflächen gezeigt. In dieser Anwendung wird der Kontakt zwischen Klebstoff und Oberfläche hergestellt, bevor das Lösungsmittel verdampft ist, um so eine kovalente Anbindung des Silans sowohl an die Glasoberfläche als auch an den Klebstoff zu erreichen. Nach der Herstellung des Kontakts muss 72 Stunden gewartet werden, bevor eine Belastung der Verklebung erfolgen kann.

Das in WO 2005/040296 A1 dargestellte Vorgehen ist akzeptabel, wenn die Wartezeit von 72 Stunden eingehalten werden kann. In vielen Fällen führt diese Wartezeit aber zu einer Verzögerung der Produktion. Soll weiterhin die Vorbehandlung der Oberfläche durch den Endverbraucher bei privaten Anwendungen vorgenommen werden, so ist eine Verkürzung der Wartezeit absolut notwendig. Der Einsatz eines reaktiven Silans wie zum Beispiel γ -Amino-propyl-triethoxysilan, das in DE 198 13 081 A1 beschrieben ist, stellt aber auch keine Lösung des Problems dar, da hier die Lagerbeständigkeit zu gering ist. Konsumerprodukte zum Beispiel liegen häufig recht lange im Verkaufsraum oder beim Kunden, bevor sie angewendet werden. Lagerzeiten von zwei Jahren zwischen Produktion und Verwendung sind keine Seltenheit.

Eine erste Verbesserung der Lagerstabilität ist mit einer Lösung insbesondere zur Vorbehandlung einer hydrophilen Oberfläche zur Hydrophobierung bekannt geworden, die in der DE10 2007 030 196 A1 offenbart ist. Die Lösung enthält ein Silan der Formel 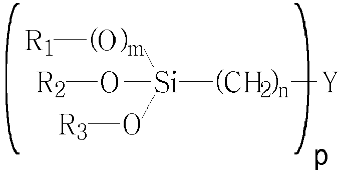 mit
R1, R2, R3 unabhängig voneinander gewählt aus der Gruppe Methyl, Ethyl, 2-Methoxyethyl, i-Propyl
   - m =: 0 oder 1
   - n =: 0 bis 12
   - p =: 1 oder 2

   - und für p =: 1
Y = einer funktionellen Gruppe gewählt aus der Gruppe
Alkyl, Vinyl, Phenyl, Cyclobutyl, Cyclopentyl, Cyclohexyl, Glycidyl, Glycidyloxy, Isocyanato, Ureido, -CF3, -(CF2)qCF3 mit q = 1 bis 12, Cyanid, Halogenid, (Meth)acryl, (Meth)acryloxy, -NH-CH2-CH2-NR4R5, -NR4R5 (mit R4 und R5 unabhängig voneinander gewählt aus der Gruppe H, Alkyl, Phenyl, Benzyl, Cyclopentyl, Cyclohexyl) beziehungsweise
für p = 2
Y = O, S, NH
sowie eine Komponente enthaltend, die bewirkt, dass der pH-Bereich der einen hydrophilen Oberfläche um mindestens zwei Einheiten vom neutralen Bereich abweicht.

DE10 2007 030 196 A1 lehrt, dass ein geringer Anteil an Wasser (bis 5 Gewichtsprozent) in der Lösung vorhanden sein kann, ohne dass er sich nachteilig auf die Lagerstabilität auswirkt. Deutlich höhere Wasseranteile verkürzen gemäß DE 10 2007 030 196 A1 die Lagerdauer beträchtlich.

In DE 10 2009 007 930 A1 wird eine weitere Verbesserung zur Erhöhung der Lagerfähigkeit eines hochreaktiven, also sehr schnell reagierenden Silans durch Verwendung eines zweiten, die Alterungsstabilität erhöhenden Silans vorgeschlagen. Hinsichtlich des Lösungsmittels wird gelehrt, dass es von Vorteil ist, wenn es mindestens 30 Gewichtsprozent Carbonsäureester enthält.

Mit den Verbesserungen der beiden Schriften DE 10 2007 030 196 A1 und DE 10 2009 007 930 A1 können zwar weitgehend praxistaugliche Ergebnisse erzielt werden, jedoch ist die Lagerstabilität der Primerlösungen immer noch nicht voll befriedigend.

So wurde beispielsweise gefunden, dass die Lösungen nach einer Lagerzeit von 5 Monaten bei 40 °C manchmal nicht mehr wie ursprünglich funktionieren. Es bildet sich dann ein weißer Niederschlag, der, wenn man ihn auf eine Kachel aufträgt, schmierig wirkt und keine haftvermittelnde Wirkung mehr hat.

Die EP 1 659 160 A1 betrifft einen Primer zum Vulkanisationsverkleben, der ein Copolymerisationsoligomer von Aminogruppen enthaltendem Alkoxysilan und Vinylgruppen enthaltendem Alkoxysilan und eine Organometallverbindung umfasst. Aufgabe der Erfindung ist es, die Lagerfähigkeit einer hochreaktiven, also sehr schnell reagierenden Primerlösung zur Vorbehandlung von feuchten Kacheln und anderen hydrophilen Oberflächen zu erhöhen, damit das Produkt länger angewendet werden kann. Das letztendliche Ziel ist es dabei, die Haftung von "tesa-Powerstrip"^{®} sowie anderen haftklebrigen Produkten auf feuchten Untergründen durch die Vorbehandlung mit dieser Primerlösung hinsichtlich der Schnelligkeit des Haftungsaufbaus und der Halteleistung auch nach langer Lagerzeit der Primerlösung sowie nach Lagerung derselben bei höheren Temperaturen weiter zu verbessern.

Die Reaktivität der Primerlösung soll dabei so hoch sein, dass spätestens 10 Minuten nach dem Auftragen des Primers die Verklebung erfolgen kann und diese nach möglichst kurzer Zeit in einem Kippscher-Verklebungstest auf Kacheln mit "tesa-Powerstrip"^{®} bei einer Kippscherbelastung von 1 kg mit einem Hebelarm von 50 mm im Feuchtwärmeklima (35 °C, 85 % rel. Feuchte) möglichst dauerhaft belastet werden kann.

Gelöst wird diese Aufgabe durch eine Lösung, wie sie im Hauptanspruch dargelegt ist. Gegenstand der Unteransprüche sind vorteilhafte Fortbildungen des Erfindungsgegenstandes. Des Weiteren betrifft die Erfindung Verwendungen der erfindungsgemäßen Lösung sowie ein Set mit der erfindungsgemäßen Lösung und einer Klebstofffolie.

Demgemäß betrifft die Erfindung eine Lösung insbesondere zur Vorbehandlung einer hydrophilen Oberfläche zur Hydrophobierung, enthaltend
I. mindestens ein erstes Silan, wobei das erste Silan 3-Aminopropyltrimethoxysilan oder 3-Aminopropyltriethoxysilan ist,
   und
II. mindestens ein zweites Silan, wobei das zweite Silan Vinyltrimethoxysilan oder Vinyltriethoxysilan ist,
   wobei die Lösung keine weiteren Silane enthält, wobei die Silane in Summe in einer Konzentration von 0,1 bis 1,0 Gewichtsprozent in der Lösung vorliegen, und wobei das zweite Silan in einer höheren Gewichtskonzentration vorliegt als das erste Silan, und zwar in einer 2,0 bis 6,0 fachen Gewichtskonzentration, und
III. Isopropanol
   und
IV. Wasser, wobei die Konzentration des Wassers in der Lösung zwischen größer 5,0 Gewichtsprozent und kleiner 30,0 Gewichtsprozent beträgt.

Gemäß einer ersten vorteilhaften Ausführungsform besteht die erfindungsgemäße Lösung aus den vier genannten Komponenten.

Gemäß der Erfindung ist das erste Silan ein Amino-funktionalisiertes Silan, und zwar 3-Aminopropyltrimethoxysilan (CAS-Nr.: 13822-56-5) oder 3-Aminopropyltriethoxysilan (CAS-Nr.: 919-30-2).

Das zweite Silan ist Vinyltrimethoxysilan (CAS-Nr.: 2768-02-7) oder Vinyltriethoxysilan (CAS-Nr.: 78-08-0).

Weiter liegen die Silane in der Lösung in Summe in einer Konzentration von 0,1 bis 1,0 Gewichtsprozent vor.

Das zweite Silan liegt in einer höheren Gewichtskonzentration vor als das erste Silan, und zwar in einer 2,0- bis 6,0-fachen Gewichtskonzentration.

Beim Wasser handelt es sich vorteilhafterweise um destilliertes oder voll entsalztes Wasser.

Die Konzentration des Wassers in der Lösung beträgt zwischen größer 5 Gewichtsprozent und kleiner 30 Gewichtsprozent, bevorzugt zwischen größer 6 Gewichtsprozent und kleiner 20 Gewichtsprozent, besonders bevorzugt zwischen größer 7 Gewichtsprozent und kleiner 10 Gewichtsprozent.

Es ist weiterhin erfindungsgemäß, dass die Lösung keine weiteren Silane enthält. Erfindungsgemäß ist es insbesondere, dass die Lösung kein Silan der Formel Si(OR⁹)₄mit R⁹ = Methyl, Ethyl, n-Propyl, Isopropyl, Butyl, Isobutyl, Benzyl, Phenyl enthält. Es ist weiterhin vorteilhaft, wenn bei der Anwendung der erfindungsgemäßen Lösung keine besonderen Schutzmaßnahmen wie Handschuhe benötigt werden, weshalb als relativ ungefährliches Lösungsmittel ein Alkohol/ Wasser-Gemisch Verwendung findet.

Am Beispiel der Reaktion der Silane mit einer Glasoberfläche kann die Funktionsweise der erfindungsgemäßen Lösung erläutert werden. Die Reaktion der Silane mit der Glasoberfläche läuft in einem Schritt ab. Die Silane liegen bereits hydrolysiert vor, das heißt, die ursprünglich in den Silanen vorhandenen alkoholischen Gruppen RO sind durch die Reaktion mit dem Wasser bereits abgespalten und durch Hydroxygruppen ersetzt. Die somit entstandenen Si-OH(Silanol)-Gruppen reagieren zum einen mit sich selbst, zum anderen mit den OH-Gruppen der Glasoberfläche, wodurch eine kovalente Bindung entsteht. Wenn die Glasoberfläche vollständig silanisiert wird, ist der oben beschriebene Wasserfilm entfernt und kann auch nicht mehr gebildet werden, so dass das Wasser nicht mehr die Möglichkeit hat, hinter die Verklebung zu laufen.

Überraschend einfach und für den Fachmann völlig unerwartet wird die gestellte Aufgabe, die Alterungsstabilität einer hochreaktiven, also sehr schnell reagierenden Primerlösung zur Vorbehandlung von feuchten Kacheln und anderen hydrophilen Oberflächen zu erhöhen, durch eine alkoholisch-wässrige Lösung zweier Silane gelöst, wie sie im Hauptanspruch dargelegt werden. Dadurch, dass die Silane bereits hydrolysiert vorliegen, ist die Reaktivität gegenüber einer nicht hydrolysierten Lösung von Silanen bei gleichzeitiger Verbesserung der Alterungsstabilität sogar erhöht.

Die Darreichungsform der erfindungsgemäßen Lösung ist besonders für die Anwendung im privaten Bereich durch den Endverbraucher von entscheidender Bedeutung. Bevorzugt sind hier die Abfüllung in Flaschen, Tuben oder Dosen zum Beispiel als Pumpspray oder als Aerosol beziehungsweise eine Abfüllung in Siegelrandbeuteln mit einem Vlies, einem Gewebe oder einem Schwamm. Solch ein Siegelrandbeutel besteht aus einer losungsmittel- und wasserundurchlässigen Folie wie zum Beispiel einem Verbund aus PE/AI/PET. Diese Folie kann unter Einwirkung von Hitze verschweißt werden. In dem dadurch entstehenden Beutel befindet sich ein Tuch, am besten ein Vlies, das mit der Haftvermittlerlösung, bestehend zumindest aus den beiden Silanen und Lösungsmittel getränkt ist. Für die Anwendung kann der Endverbraucher den Beutel aufreißen, das getränkte Tuch entnehmen und damit seinen keramischen Untergrund, seine Kachel oder das Glas, auf dem verklebt werden soll, vorbehandeln.

Eine bevorzugte Darreichungsform ist außerdem die Abfüllung in Behälter enthaltend ein Reservoir und einen Applikator. Die Silanlösung wird hierbei durch Kontaktieren der Oberfläche mit dem Applikator aufgetragen.

Ganz besonders bevorzugt sind solche Verpackungen, bei denen Anwender mit den Lösungen auch während der Anwendung gar nicht in Kontakt kommen kann.

Beispielsweise können ein Vlies oder ein Schwamm in eine Verpackung derart integriert sein, dass sie sich an der freien Oberfläche der Verpackung befinden. In der Verpackung befindet sich zusätzlich die Lösung, die durch eine durchtrennbare Membran vom Vlies oder Schwamm getrennt ist oder die von einer Hülle umschlossen ist und auf diese Weise vom Vlies oder Schwamm getrennt ist.

Nach Durchtrennen der Membran oder der Zerstörung einer Hülle durch Druck, den der Verbraucher auf die Verpackung ausübt, wird das Vlies benetzt, indem die Lösung durch einen entsprechend geformten Kanal dem Vlies oder dem Schwamm zugeführt wird. Die Lösung durchdringt das freiliegende Vlies oder den Schwamm und kann mit denselben mit der hydrophilen Oberfläche in Kontakt gebracht werden, ohne dass der Anwender das Vlies oder den Schwamm berührt.

Optimalerweise geschieht die Reaktion auf der Oberfläche dann innerhalb weniger Minuten, so dass anschließend die Verklebung und auch die Belastung der Verklebung erfolgen können.

Bevorzugt in Kombination mit der Erfindung verwendbare Klebebänder sind hochelastische Klebstofffolien für wiederlösbare Verklebungen, die durch Ziehen in Richtung der Verklebungsebene wieder lösbar sind. Diese Klebstofffolien sind im Handel unter den Bezeichnungen "tesa Powerstrips"^{®} und "tesa Posterstrips"^{®} und "tesa Powerstrips System-Haken"^{®}, ein so genannter Systemhaken mit Basisplatte und aufsteckbarem Dekorhaken, von der tesa SE erhältlich. Des Weiteren bietet die Firma 3M unter der Bezeichnung "Command Adhesive" ähnliche, auch durch Zug lösbare Klebstofffolien an, die aus einem Schaumstoffzwischenträger bestehen, auf den beidseitig Klebstoffe aufgebracht sind.

Elastisch oder plastisch hochdehnbare Haftklebestreifen, welche sich durch dehnendes Verstrecken in der Verklebungsebene rückstands- und zerstörungsfrei wieder ablösen lassen, sind des Weiteren beispielsweise aus der US 4,024,312 A, DE 33 31 016 C2, WO 92/11332 A1, WO 92/11333 A1, DE 42 22 849 A1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 854 A1, WO 99/37729 A1 und DE 100 03 318 A1 bekannt.

Die folgenden Beispiele sollen dazu dienen, die Erfindung zu veranschaulichen, ohne sie einzuschränken zu wollen.

### Beispiele

Die folgenden Prüfmethoden wurden eingesetzt, um die erfindungsgemäß hergestellten Primerlösungen kurz zu charakterisieren.

Die Messungen werden, wenn nicht anders angegeben, bei einem Prüfklima von 23 ± 1 °C und 50 ± 5 % rel. Luftfeuchte durchgeführt.

### Prüfmethoden

Zur Untersuchung der Lösungen wurden diese jeweils mit einem damit getränkten Vlies (Bezeichnung des verwendeten Vlieses: EVO 80, Zusammensetzung: Polyester/Polyamid 6, 70/30, Firma Freudenberg) auf eine Keramikkachel mit einer glatten Glasierung kurz bestrichen. Nach einer Wartezeit von 10 Minuten, in der das Lösemittel abdunstete, wurden auf die somit vorbehandelte Kachel zwei unterschiedliche Klebebänder geklebt. Zum einen wurde ein doppelseitiges Acrylatfix, tesa^{®} 4952 (ein doppelseitiges Klebeband mit einem Schaumstoffträger und einem alterungsbeständigen Acrylatklebstoff mit einer Dicke von 1,2 mm und einer Klebkraft auf Stahl von 14 N/25 mm) verwendet, zum anderen Powerstrips^{®} Large der Firma tesa (doppelseitig klebende, trägerlose, einzeln eingesiegelte Stanzlinge mit einem Klebstoff basierend auf Synthesekautschuk mit einer Dicke von 0,65 mm und einer Klebkraft auf Stahl von 74,0 N/25 mm), wie sie in der DE 100 55 942 A1 in den Beispielen zu finden sind.

Letztere sind weiterhin ausführlich beschrieben in der DE 33 31 016 C2, DE 42 22 849 A1, DE 42 33 872 A1, DE 44 31 914 A1, DE 195 37 323 A1, DE 197 08 364 A1, DE 197 29 706 und DE 100 33 399 A1.

Die Verklebungsflächen betrugen in beiden Fällen 3,8 cm x 2,0 cm. Es wurden jeweils drei Einzelverklebungen durchgeführt.

Auf die Klebemittel wurde mit einem 10 Sekunden andauernden Druck von 100 N eine gesäuberte Stahlbasisplatte geklebt, die zentral mittig mit einem Schraubloch versehen war. In das Schraubloch wurde ein 3 mm breiter Stab aus Metall geschraubt, der somit senkrecht von der Stahlbasisplatte abstand. Dieser Stab war mit Einkerbungen versehen, so dass im definierten Abstand von der Stahlplatte Gewichte angebracht werden konnten. Die Kacheln wurden unmittelbar danach in einen konstant klimatisierten Raum mit einer Temperatur von 35 °C und einer relativen Luftfeuchtigkeit von 85 % gebracht, dort senkrecht befestigt, und an den somit nun waagerecht abstehenden Stab wurde im Abstand von 50 mm ein Gewicht von 200 g beim Acrylatfix und 1 kg im Falle von Powerstrip gehängt.

Das Anhängen des Gewichtes erfolgte:
a) sofort nach der senkrechten Befestigung der Kachel (maximal 3 Minuten nach der Verklebung der Stahlbasisplatte)
b) 15 Minuten nach der senkrechten Befestigung der Kachel
c) 30 Minuten nach der senkrechten Befestigung der Kachel.

Nach einer anschließenden Wartezeit von 10 Minuten wurde Wasser (2 ml) oben auf den Rand der Klebefuge geträufelt. Diese Benetzung wurde alle 24 Stunden wiederholt. Gemessen wurde die Zeit in Stunden, bis der Stab von der Wand fiel. Zum Vergleich wurden Stäbe ohne Haftvermittler aufgehängt.

Diese Versuche wurden mit Frischmustern und gelagerten Mustern durchgeführt. Die Muster wurden zum einen in gut verschlossenen 500 ml- Schraubgläsern vorgelegt (jeweils ca. 350 ml Primerlösung pro Glas), zum anderen eingeschweißt in Siegelrandbeuteln (Sachets), die einen dreilagigen Aufbau Polyester/ Aluminium/ Polyethylen hatten. Mit in die Sachets eingeschweißt war jeweils ein zusammengefaltetes Vlies (EVO 80) mit einer Fläche von 6 cm x 12 cm. In jedem Sachet befand sich ca. 0,85 ml Primerlösung.

Die gelagerten Muster wurden zudem visuell beurteilt. Dabei wurde festgestellt, ob die Lösungen klar waren oder ob eine Trübung oder ein weißer Niederschlag vorlag. Die Untersuchungen und Beurteilungen erfolgten nach folgenden Lagerzeiten:
- Frisch (nach maximal drei Tagen Lagerung bei Raumtemperatur (23 °C)
- Nach 12 Monaten bei Raumtemperatur (23 °C)
- Nach 12 Monaten bei 40 °C
- Nach 12 Monaten bei 55 °C

Die Ergebnisse sind den Tabellen im Anschluss an den einzelnen Beispielen zu entnehmen.

### Herstellung der Primerlösungen

Zur Herstellung der erfindungsgemäßen Primerlösungen sowie der Vergleichsmuster wurden die folgenden Silane verwendet:

| **Silan** | **Handelsname** | **CAS-Nr.** | **Hersteller oder Lieferant** |
|---|---|---|---|
| 3-Aminopropyltrimethoxysilan | | 13822-56-5 | Sigma-Aldrich |
| 3-Aminopropyltriethoxysilan | Dynasylan AMEO^{®} | 919-30-2 | Evonik |
| N-2-Aminoethyl-3-amino-propyltrimethoxysilan | Dynasylan DAMO^{®} | 1760-24-3 | Evonik |
| Bis[3-triethoxysilyl)propyl]amin | Dynasylan 1122^{®} | 13497-18-2 | Evonik |
| 3-Methacryloxypropyltrimethoxysilan | Dynasylan MEMO^{®} | 2530-85-0 | Evonik |
| Vinyltrimethoxysilan | Dynasylan VTMO^{®} | 2768-02-7 | Evonik |
| Vinyltriethoxysilan | Dynasylan VTEO^{®} | 78-08-0 | Evonik |
| Tetraethoxysilan | Dynasylan A^{®} | 78-10-4 | Evonik |

**Weiterhin wurden die folgenden Lösemittel verwendet:**

| **Lösemittel** | **CAS-Nr.** | **Hersteller oder Lieferant** |
|---|---|---|
| Ethanol | 64-17-5 | Sigma-Aldrich |
| Isopropanol | 67-63-0 | Sigma-Aldrich |
| n-Butanol | 71-36-3 | Sigma-Aldrich |
| Butylacetat | 123-86-4 | Sigma-Aldrich |
| Wasser, voll entsalzt | 7732-18-5 | CSC Jäklechemie |

Die in den Beispielen angegebenen Silane/Lösungsmittel wurden mit einem Laborrührwerk der Firma IKA^{®} unter Verwendung eines Propellerrührers in folgender Weise gemischt: Für den Fall, dass mehrere Lösemittel verwendet wurden, wurden diese zunächst 15 Minuten lang homogen gemischt. Sodann wurden die Silane zugegeben. Dies erfolgte für den Fall, dass mehrere Silane verwendet wurden, in aufeinanderfolgenden, einzelnen Schritten. Es wurde also zunächst jeweils das erste der in den folgenden Beispielen aufgeführten Silane zugegeben und eingemischt. Erst nach dem Einmischen des ersten Silans wurde das zweite Silan zugegeben und ebenfalls eingemischt und so fort. Der Einmischvorgang erfolgte für jedes Silan durch 15 Minuten Rühren bei mittlerer Rührgeschwindigkeit. Es wurden jeweils 350 ml der Lösungen hergestellt und in 500 ml Schraubgläsern abgefüllt. 0,85 ml wurden jeweils in ein Sachet gegeben und zusammen mit dem Vlies in dem Sachet eingeschweißt

### Beispiel 1 (nicht erfindungsgemäß)

**Zusammensetzung der Primerlösung:**

| **Rohstoff** | **Gewichtsprozent** |
|---|---|
| Isopropanol | 90,0 |
| Wasser, voll entsalzt | 9,4 |
| Dynasylan AMEO^{®} | 0,3 |
| Dynasylan VTMO^{®} | 0,3 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | klar | Sofort | Acrylatfix | < 1 |
| | | | Powerstrip | < 1 |
| | | 15 Minuten | Acrylatfix | 20 |
| | | | Powerstrip | 16 |
| | | 30 Minuten | Acrylatfix | 400 |
| | | | Powerstrip | 350 |
| 12 Monate 23 °C | klar | Sofort | Acrylatfix | < 1 |
| | | | Powerstrip | < 1 |
| | | 15 Minuten | Acrylatfix | 18 |
| | | | Powerstrip | 14 |
| | | 30 Minuten | Acrylatfix | 450 |
| | | | Powerstrip | 400 |
| 12 Monate 40 °C | klar | Sofort | Acrylatfix | < 1 |
| | | | Powerstrip | < 1 |
| | | 15 Minuten | Acrylatfix | 24 |
| | | | Powerstrip | 20 |
| | | 30 Minuten | Acrylatfix | 400 |
| | | | Powerstrip | 380 |
| 12 Monate 55 °C | klar | Sofort | Acrylatfix | n.b. |
| | | | Powerstrip | < 1 |
| | | 15 Minuten | Acrylatfix | n.b. |
| | | | Powerstrip | 20 |
| | | 30 Minuten | Acrylatfix | n.b. |
| | | | Powerstrip | 320 |

| | | | | |
|---|---|---|---|---|
| n.b. = nicht bestimmt | | | | |

### Beispiel 2 (nicht erfindungsgemäß)

**Zusammensetzung der Primerlösung:**

| **Rohstoff** | **Gewichtsprozent** |
|---|---|
| Isopropanol | 90,0 |
| Wasser, voll entsalzt | 9,2 |
| Dynasylan AMEO^{®} | 0,6 |
| Dynasylan VTMO^{®} | 0,2 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | klar | Sofort | Acrylatfix | < 1 |
| | | | Powerstrip | < 1 |
| | | 15 Minuten | Acrylatfix | 10 |
| | | | Powerstrip | 13 |
| | | 30 Minuten | Acrylatfix | 200 |
| | | | Powerstrip | 300 |
| 12 Monate 23 °C | klar | Sofort | Acrylatfix | < 1 |
| | | | Powerstrip | < 1 |
| | | 15 Minuten | Acrylatfix | 14 |
| | | | Powerstrip | 10 |
| | | 30 Minuten | Acrylatfix | 200 |
| | | | Powerstrip | 350 |
| 12 Monate 40 °C | klar | Sofort | Acrylatfix | < 1 |
| | | | Powerstrip | < 1 |
| | | 15 Minuten | Acrylatfix | 20 |
| | | | Powerstrip | 22 |
| | | 30 Minuten | Acrylatfix | 300 |
| | | | Powerstrip | 320 |
| 12 Monate 55 °C | klar | Sofort | Acrylatfix | n.b. |
| | | | Powerstrip | < 1 |
| | | 15 Minuten | Acrylatfix | n.b. |
| | | | Powerstrip | 15 |
| | | 30 Minuten | Acrylatfix | n.b. |
| | | | Powerstrip | 200 |

| | | | | |
|---|---|---|---|---|
| n.b. = nicht bestimmt | | | | |

### Beispiel 3 (nicht erfindungsgemäß)

**Zusammensetzung der Primerlösung:**

| **Rohstoff** | **Gewichtsprozent** |
|---|---|
| Isopropanol | 90,0 |
| Wasser, voll entsalzt | 9,2 |
| Dynasylan AMEO^{®} | 0,2 |
| Dynasylan VTMO^{®} | 0,55 |
| Dynasylan A^{®} | 0,05 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | klar | Sofort | Acrylatfix | 10 |
| | | | Powerstrip | 15 |
| | | 15 Minuten | Acrylatfix | 100 |
| | | | Powerstrip | 150 |
| | | 30 Minuten | Acrylatfix | 400 |
| | | | Powerstrip | 450 |
| 12 Monate 23 °C | klar | Sofort | Acrylatfix | 20 |
| | | | Powerstrip | 30 |
| | | 15 Minuten | Acrylatfix | 18 |
| | | | Powerstrip | 14 |
| | | 30 Minuten | Acrylatfix | 450 |
| | | | Powerstrip | 400 |
| 12 Monate 40 °C | klar | Sofort | Acrylatfix | 10 |
| | | | Powerstrip | 12 |
| | | 15 Minuten | Acrylatfix | 24 |
| | | | Powerstrip | 20 |
| | | 30 Minuten | Acrylatfix | 400 |
| | | | Powerstrip | 380 |
| 12 Monate 55 °C | trüb | Sofort | Acrylatfix | < 1 |
| | | | Powerstrip | < 1 |
| | | 15 Minuten | Acrylatfix | 10 |
| | | | Powerstrip | 10 |
| | | 30 Minuten | Acrylatfix | 80 |
| | | | Powerstrip | 100 |

### Beispiel 4 (nicht erfindungsgemäß)

**Zusammensetzung der Primerlösung:**

| **Rohstoff** | **Gewichtsprozent** |
|---|---|
| Isopropanol | 84,6 |
| Wasser, voll entsalzt | 9,4 |
| Dynasylan AMEO^{®} | 2,0 |
| Dynasylan VTMO^{®} | 4,0 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | klar | Sofort | Acrylatfix | 1 |
| | | | Powerstrip | 1 |
| | | 15 Minuten | Acrylatfix | 70 |
| | | | Powerstrip | 90 |
| | | 30 Minuten | Acrylatfix | 300 |
| | | | Powerstrip | 410 |
| 12 Monate 23 °C | klar | Sofort | Acrylatfix | < 1 |
| | | | Powerstrip | < 1 |
| | | 15 Minuten | Acrylatfix | 60 |
| | | | Powerstrip | 80 |
| | | 30 Minuten | Acrylatfix | 300 |
| | | | Powerstrip | 320 |
| 12 Monate 40 °C | klar | Sofort | Acrylatfix | < 1 |
| | | | Powerstrip | < 1 |
| | | 15 Minuten | Acrylatfix | 30 |
| | | | Powerstrip | 20 |
| | | 30 Minuten | Acrylatfix | 200 |
| | | | Powerstrip | 300 |
| 12 Monate 55 °C | trüb | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | 30 |
| | | | Powerstrip | 150 |

### Beispiel 5 (nicht erfindungsgemäß)

**Zusammensetzung der Primerlösung:**

| **Rohstoff** | **Gewichtsprozent** |
|---|---|
| Ethanol | 90,0 |
| Wasser, voll entsalzt | 9,2 |
| Dynasylan AMEO^{®} | 0,2 |
| Dynasylan VTMO^{®} | 0,6 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 23 °C | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 40 °C | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 55 °C | klar | Sofort | Acrylatfix | 250 |
| | | | Powerstrip | 300 |
| | | 15 Minuten | Acrylatfix | > 500 |
| | | | Powerstrip | > 500 |
| | | 30 Minuten | Acrylatfix | > 500 |
| | | | Powerstrip | > 500 |

### Beispiel 6 (nicht erfindungsgemäß)

**Zusammensetzung der Primerlösung:**

| **Rohstoff** | **Gewichtsprozent** |
|---|---|
| n-Butanol | 90,0 |
| Wasser, voll entsalzt | 9,2 |
| Dynasylan AMEO^{®} | 0,2 |
| Dynasylan VTMO^{®} | 0,6 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | klar | Sofort | Acrylatfix | 200 |
| | | | Powerstrip | 300 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 23 °C | klar | Sofort | Acrylatfix | 220 |
| | | | Powerstrip | 300 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 40 °C | klar | Sofort | Acrylatfix | 100 |
| | | | Powerstrip | 300 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 55 °C | klar | Sofort | Acrylatfix | 100 |
| | | | Powerstrip | 150 |
| | | 15 Minuten | Acrylatfix | > 500 |
| | | | Powerstrip | > 500 |
| | | 30 Minuten | Acrylatfix | > 500 |
| | | | Powerstrip | > 500 |

### Beispiel 7

**Zusammensetzung der Primerlösung:**

| **Rohstoff** | **Gewichtsprozent** |
|---|---|
| Isopropanol | 90,0 |
| Wasser, voll entsalzt | 9,2 |
| Dynasylan AMEO^{®} | 0,2 |
| Dynasylan VTMO^{®} | 0,6 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 23 °C | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 40 °C | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 55 °C | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |

### Beispiel 8

**Zusammensetzung der Primerlösung:**

| **Rohstoff** | **Gewichtsprozent** |
|---|---|
| Isopropanol | 90,0 |
| Wasser, voll entsalzt | 9,2 |
| 3-Aminopropyltrimethoxysilan | 0,2 |
| Dynasylan VTMO^{®} | 0,6 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 23 °C | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 40 °C | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 55 °C | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |

### Beispiel 9 (nicht erfindungsgemäß)

**Zusammensetzung der Primerlösung:**

| **Rohstoff** | **Gewichtsprozent** |
|---|---|
| Isopropanol | 69,2 |
| Wasser, voll entsalzt | 30,0 |
| Dynasylan AMEO^{®} | 0,2 |
| Dynasylan VTMO^{®} | 0,6 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 23 °C | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 40 °C | klar | Sofort | Acrylatfix | 50 |
| | | | Powerstrip | 80 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 55 °C | trüb | Sofort | Acrylatfix | < 1 |
| | | | Powerstrip | < 1 |
| | | 15 Minuten | Acrylatfix | 100 |
| | | | Powerstrip | 150 |
| | | 30 Minuten | Acrylatfix | 200 |
| | | | Powerstrip | > 500 |

### Beispiel 10 (nicht erfindungsgemäß)

**Zusammensetzung der Primerlösung:**

| **Rohstoff** | **Gewichtsprozent** |
|---|---|
| Isopropanol | 90,0 |
| Wasser, voll entsalzt | 9,2 |
| Dynasylan DAMO^{®} | 0,2 |
| Dynasylan VTMO^{®} | 0,6 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 23 °C | klar | Sofort | Acrylatfix | 400 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 40 °C | klar | Sofort | Acrylatfix | 300 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 55 °C | klar | Sofort | Acrylatfix | 200 |
| | | | Powerstrip | 300 |
| | | 15 Minuten | Acrylatfix | > 500 |
| | | | Powerstrip | > 500 |
| | | 30 Minuten | Acrylatfix | > 500 |
| | | | Powerstrip | > 500 |

### Beispiel 11 (nicht erfindungsgemäß)

**Zusammensetzung der Primerlösung:**

| **Rohstoff** | **Gewichtsprozent** |
|---|---|
| Isopropanol | 90,0 |
| Wasser, voll entsalzt | 9,2 |
| Dynasylan 1122^{®} | 0,2 |
| Dynasylan VTMO^{®} | 0,6 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 23 °C | klar | Sofort | Acrylatfix | 400 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 40 °C | klar | Sofort | Acrylatfix | 300 |
| | | | Powerstrip | 400 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 55 °C | klar | Sofort | Acrylatfix | 300 |
| | | | Powerstrip | 300 |
| | | 15 Minuten | Acrylatfix | > 500 |
| | | | Powerstrip | > 500 |
| | | 30 Minuten | Acrylatfix | > 500 |
| | | | Powerstrip | > 500 |

### Beispiel 12 (nicht erfindungsgemäß)

**Zusammensetzung der Primerlösung:**

| **Rohstoff** | **Gewichtsprozent** |
|---|---|
| Isopropanol | 90,0 |
| Wasser, voll entsalzt | 9,2 |
| Dynasylan MEMO^{®} | 0,2 |
| Dynasylan VTMO^{®} | 0,6 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | klar | Sofort | Acrylatfix | 400 |
| | | | Powerstrip | 300 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 23 °C | klar | Sofort | Acrylatfix | 300 |
| | | | Powerstrip | 400 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 40 °C | klar | Sofort | Acrylatfix | 100 |
| | | | Powerstrip | 100 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 55 °C | klar | Sofort | Acrylatfix | 100 |
| | | | Powerstrip | 50 |
| | | 15 Minuten | Acrylatfix | 300 |
| | | | Powerstrip | 300 |
| | | 30 Minuten | Acrylatfix | > 500 |
| | | | Powerstrip | > 500 |

### Beispiel 13

**Zusammensetzung der Primerlösung:**

| **Rohstoff** | **Gewichtsprozent** |
|---|---|
| Isopropanol | 90,0 |
| Wasser, voll entsalzt | 9,2 |
| Dynasylan AMEO^{®} | 0,2 |
| Dynasylan VTEO^{®} | 0,6 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 23 °C | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 40 °C | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |
| 12 Monate 55 °C | klar | Sofort | Acrylatfix | > 500 |
| | | | Powerstrip | > 500 |
| | | 15 Minuten | Acrylatfix | > 500 |
| | | | Powerstrip | > 500 |
| | | 30 Minuten | Acrylatfix | > 500 |
| | | | Powerstrip | > 500 |

### Vergleichsbeispiel 1

**Zusammensetzung des Vergleichsmusters:**

| **Rohstoff** | **Gewichtsprozent** |
|---|---|
| Isopropanol | 90,0 |
| Wasser, voll entsalzt | 9,2 |
| Dynasylan AMEO^{®} | 0,8 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | klar | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | 20 |
| | | | Powerstrip | 10 |
| 12 Monate 23 °C | klar | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | 10 |
| | | | Powerstrip | 5 |
| 12 Monate 40 °C | klar | Sofort | Acrylatfix | < 1 |
| | | | Powerstrip | < 1 |
| | | 15 Minuten | Acrylatfix | < 1 |
| | | | Powerstrip | 3 |
| | | 30 Minuten | Acrylatfix | 2 |
| | | | Powerstrip | < 1 |
| 12 Monate 55 °C | klar | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | < 1 |
| | | | Powerstrip | < 1 |

### Vergleichsbeispiel 2

**Zusammensetzung des Vergleichsmusters:**

| **Rohstoff** | **Gewichtsprozent** |
|---|---|
| Isopropanol | 90,0 |
| Wasser, voll entsalzt | 9,2 |
| Dynasylan VTMO^{®} | 0,8 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | klar | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | 5 |
| | | | Powerstrip | 5 |
| 12 Monate 23 °C | klar | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | 5 |
| | | | Powerstrip | 5 |
| 12 Monate 40 °C | klar | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | < 1 |
| | | | Powerstrip | < 1 |
| 12 Monate 55 °C | klar | Sofort | Acrylatfix | < 1 |
| | | | Powerstrip | < 1 |
| | | 15 Minuten | Acrylatfix | 2 |
| | | | Powerstrip | 2 |
| | | 30 Minuten | Acrylatfix | < 1 |
| | | | Powerstrip | < 1 |

### Vergleichsbeispiel 3

**Zusammensetzung des Vergleichsmusters:**

| **Rohstoff** | **Gewichtsprozent** |
|---|---|
| Butylacetat | 90,0 |
| Wasser, voll entsalzt | 9,2 |
| Dynasylan AMEO^{®} | 0,2 |
| Dynasylan VTMO^{®} | 0,6 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | Niederschlag | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | < 1 |
| | | | Powerstrip | < 1 |
| 12 Monate 23 °C | Niederschlag | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | < 1 |
| | | | Powerstrip | < 1 |
| 12 Monate 40 °C | Niederschlag | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | < 1 |
| | | | Powerstrip | < 1 |
| 12 Monate 55 °C | Niederschlag | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | < 1 |
| | | | Powerstrip | < 1 |

### Vergleichsbeispiel 4

**Zusammensetzung des Vergleichsmusters:**

| **Rohstoff** | **Gewichtsprozent** |
|---|---|
| Isopropanol | 99,2 |
| Dynasylan AMEO^{®} | 0,2 |
| Dynasylan VTMO^{®} | 0,6 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | klar | Sofort | Acrylatfix | < 1 |
| | | | Powerstrip | < 1 |
| | | 15 Minuten | Acrylatfix | 5 |
| | | | Powerstrip | 5 |
| | | 30 Minuten | Acrylatfix | 10 |
| | | | Powerstrip | 10 |
| 12 Monate 23 °C | klar | Sofort | Acrylatfix | < 1 |
| | | | Powerstrip | < 1 |
| | | 15 Minuten | Acrylatfix | 5 |
| | | | Powerstrip | 5 |
| | | 30 Minuten | Acrylatfix | 8 |
| | | | Powerstrip | 10 |
| 12 Monate 40 °C | trüb | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | < 1 |
| | | | Powerstrip | < 1 |
| 12 Monate 55 °C | trüb | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | < 1 |
| | | | Powerstrip | < 1 |

### Vergleichsbeispiel 5

**Zusammensetzung des Vergleichsmusters:**

| **Lösemittel, Silan** | **Gewichtsprozent** |
|---|---|
| Wasser, voll entsalzt | 99,2 |
| Dynasylan AMEO^{®} | 0,2 |
| Dynasylan VTMO^{®} | 0,6 |

**Ergebnisse:**

| Lagerzeit | Visuelle Beurteilung der Lösung | Zeit bis zum Anhängen des Gewichts | Klebeband | Haltezeit (Stunden) |
|---|---|---|---|---|
| Frisch | Niederschlag | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | < 1 |
| | | | Powerstrip | < 1 |
| 12 Monate 23 °C | Niederschlag | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | < 1 |
| | | | Powerstrip | < 1 |
| 12 Monate 40 °C | Niederschlag | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | < 1 |
| | | | Powerstrip | < 1 |
| 12 Monate 55 °C | Niederschlag | Sofort | Acrylatfix | < 1 |
| | | | Powerstrip | < 1 |
| | | 15 Minuten | Acrylatfix | < 1 |
| | | | Powerstrip | < 1 |
| | | 30 Minuten | Acrylatfix | < 1 |
| | | | Powerstrip | < 1 |

Sämtliche Versuche wurden sowohl mit den in den Schraubgläsern gelagerten Lösungen als auch mit den Lösungen aus den Sachets durchgeführt. Die Ergebnisse waren jeweils identisch. Vergleichsversuche ohne Haftvermittler ergaben Haltezeiten von maximal 1 Stunde beim Acrylatfix und kleiner 1 Stunde beim Powerstrip.

## Patentansprüche

1. Lösung insbesondere zur Vorbehandlung einer Oberfläche, enthaltend, vorzugsweise bestehend aus
I. mindestens ein erstes Silan, wobei das erste Silan 3-Aminopropyltrimethoxysilan oder 3-Aminopropyltriethoxysilan ist,
und
II. mindestens ein zweites Silan, wobei das zweite Silan Vinyltrimethoxysilan oder Vinyltriethoxysilan ist,
wobei die Lösung keine weiteren Silane enthält, wobei die Silane in Summe in einer Konzentration von 0,1 bis 1,0 Gewichtsprozent in der Lösung vorliegen, und wobei das zweite Silan in einer höheren Gewichtskonzentration vorliegt als das erste Silan, und zwar in einer 2,0 bis 6,0 fachen Gewichtskonzentration,
und
III. Isopropanol
und
IV. Wasser, wobei die Konzentration des Wassers in der Lösung zwischen größer 5,0 Gewichtsprozent und kleiner 30,0 Gewichtsprozent beträgt.

2. Lösung nach Anspruch 1,
**dadurch gekennzeichnet, dass**
es sich bei dem Wasser um destilliertes oder voll entsalztes Wasser handelt.

3. Lösung nach Anspruch 1 oder 2,
**dadurch gekennzeichnet, dass**
die Konzentration des Wassers in der Lösung zwischen größer 6,0 Gewichtsprozent und kleiner 20,0 Gewichtsprozent, bevorzugt zwischen größer 7,0 Gewichtsprozent und kleiner 10,0 Gewichtsprozent beträgt.

4. Pumpspray aus einer Lösung nach einem der Ansprüche 1 bis 3.

5. Aerosol aus einer Lösung nach einem der Ansprüche 1 bis 3.

6. Siegelrandbeutel abgefüllt mit einer Lösung nach einem der Ansprüche 1 bis 3 in einem Vlies, einem Gewebe oder einem Schwamm

7. Behälter enthaltend (i) ein Reservoir, (ii) einen Applikator und abgefüllt mit einer Lösung nach
einem der Ansprüche 1 bis 3, wobei die Lösung berührungslos aufgetragen werden kann.

8. Verpackung mit einer Lösung nach einem der Ansprüche 1 bis 3, in die ein Vlies, ein Gewebe oder ein Schwamm derart integriert sind,
dass sich die Lösung an der freien Oberfläche der Verpackung befindet wobei die Lösung (i) durch eine durchtrennbare Membran vom Vlies, vom Gewebe oder vom Schwamm getrennt ist oder (ii) von einer Hülle umschlossen ist und auf diese Weise vom Vlies, vom Gewebe oder Schwamm getrennt ist.

9. Verwendung der Lösung nach einem der Ansprüche 1 bis 3 zur Hydrophobierung hydrophiler Oberflächen zur Verbesserung der Lebensdauer einer adhäsiven Klebverbindung eines Haftklebstoffs auf der Oberfläche unter Feuchtigkeitseinfluss und Nässe.

10. Verwendung der Lösung nach einem der Ansprüche 1 bis 3 zur Hydrophobierung hydrophiler Oberflächen und anschließender Verklebung einer durch Ziehen in Richtung der Verklebungsebene beschädigungslos wieder lösbaren Klebstofffolie mit einem Klebstoff auf Basis von Polymeren und/oder Copolymeren aus Synthesekautschuk und/oder Naturkautschuk.

11. Set aus einer Lösung nach einem der Ansprüche 1 bis 3 und einer Klebstofffolie zum Befestigen eines Gegenstandes, wobei die Klebstofffolie mit einem Klebstoff auf Basis von Polymeren und/oder Copolymeren aus Synthesekautschuk und/oder Naturkautschuk durch Ziehen in Richtung der Verklebungsebene beschädigungslos wieder lösbar ist.

## Claims

1. Solution particularly for pretreating a surface, comprising, preferably consisting of,
I. at least one first silane, the first silane being 3-aminopropyltrimethoxysilane or 3-aminopropytri-ethoxysilane,
and
II. at least one second silane, the second silane being vinyltrimethoxysilane or vinyltriethoxysilane,
with the solution containing no further silanes, and the silanes being present in total in a concentration of 0.1 to 1.0 weight per cent in the solution, and the second silane being present in a higher weight concentration than the first silane, specifically in a 2.0- to 6.0-fold weight concentration,
and
III. isopropanol
and
IV. water, where the concentration of the water in the solution is between greater than 5.0 weight per cent and less than 30.0 weight per cent.

2. Solution according to Claim 1,
**characterized in that**
the water is distilled or fully demineralized water.

3. Solution according to Claim 1 or 2,
**characterized in that**
the concentration of the water in the solution is between greater than 6.0 weight per cent and less than 20.0 weight per cent, preferably between greater than 7.0 weight per cent and less than 10.0 weight per cent.

4. Pump spray comprising a solution according to any of Claims 1 to 3.

5. Aerosol comprising a solution according to any of Claims 1 to 3.

6. Sealed-edge pouch filled with a solution according to any of Claims 1 to 3 in a nonwoven web, a woven fabric or a sponge.

7. Container comprising (i) a reservoir, (ii) an applicator, and filled with a solution according to any of Claims 1 to 3, where the solution can be applied contactlessly.

8. Pack with a solution according to any of Claims 1 to 3, into which a nonwoven web, a woven fabric or a sponge are integrated in such a way that the solution is located on the free surface of the pack, the solution (i) being separated from the nonwoven web, the woven fabric or the sponge by a severable membrane or (ii) being surrounded by an envelope and in this way being separated from the nonwoven web, the woven fabric or the sponge.

9. Use of the solution according to any of Claims 1 to 3 for rendering hydrophilic surfaces water repellent in order to improve the lifetime of an adhesive bond of a pressure-sensitive adhesive on the surface under moisture influence and wetness.

10. Use of the solution according to any of Claims 1 to 3 for rendering hydrophilic surfaces water repellent and for subsequent bonding of an adhesive sheet which can be reparted without damage by pulling in the direction of the bond plane and which has an adhesive based on polymers and/or copolymers of synthetic rubber and/or natural rubber.

11. Set composed of a solution according to any of Claims 1 to 3 and an adhesive sheet for the fastening of an article, where the adhesive sheet, with an adhesive based on polymers and/or copolymers of synthetic rubber and/or natural rubber, can be reparted without damage by pulling in the direction of the bond plane.

## Revendications

1. Solution en particulier pour le prétraitement d'une surface, contenant, de préférence constituée
I. d'au moins un premier silane, le premier silane étant le 3-aminopropyltriméthoxysilane ou le 3-aminopropyltriéthoxysilane,
et
II. d'au moins un deuxième silane, le deuxième silane étant le vinyltriméthoxysilane ou le vinyltriéthoxysilane,
la solution ne contenant aucun autre silane, les silanes étant présents au total en une concentration de 0,1 à 1,0 pour cent en poids dans la solution, et le deuxième silane étant présent en une concentration en poids plus élevée que le premier silane, et notamment en une concentration en poids de 2,0 à 6,0 fois,
et
III. de l'isopropanol
et
IV. d'eau, la concentration de l'eau dans la solution étant comprise entre plus de 5,0 pour cent en poids et moins de 30,0 pour cent en poids.

2. Solution selon la revendication 1, **caractérisée en ce que** l'eau est de l'eau distillée ou totalement dessalée.

3. Solution selon la revendication 1 ou 2, **caractérisée en ce que** la concentration de l'eau dans la solution est comprise entre plus de 6,0 pour cent en poids et moins de 20,0 pour cent en poids, préférablement entre plus de 7,0 pour cent en poids et moins de 10,0 pour cent en poids.

4. Pulvérisateur à pompe d'une solution selon l'une quelconque des revendications 1 à 3.

5. Aérosol d'une solution selon l'une quelconque des revendications 1 à 3.

6. Sachet à bords scellés rempli avec une solution selon l'une quelconque des revendications 1 à 3 dans un non-tissé, un tissu ou une éponge.

7. Récipient contenant (i) un réservoir, (ii) un applicateur et rempli avec une solution selon l'une quelconque des revendications 1 à 3, la solution pouvant être déposée sans contact.

8. Emballage comportant une solution selon l'une quelconque des revendications 1 à 3, dans lequel un non-tissé, un tissu ou une éponge est intégré(e) de telle manière que la solution se trouve au niveau de la surface libre de l'emballage, la solution (i) étant séparée du non-tissé, du tissu ou de l'éponge par une membrane sécable ou (ii) étant entourée d'une enveloppe et étant, de cette manière, séparée du non-tissé, du tissu ou de l'éponge.

9. Utilisation de la solution selon l'une quelconque des revendications 1 à 3 pour l'hydrophobisation de surfaces hydrophiles pour l'amélioration de la durée de conservation d'un assemblage collé adhésif d'un adhésif autocollant sur la surface sous l'influence de l'humidité et en cas d'humidité.

10. Utilisation de la solution selon l'une quelconque des revendications 1 à 3 pour l'hydrophobisation de surfaces hydrophiles et le collage consécutif d'une feuille adhésive à nouveau détachable sans dommage en tirant dans la direction du plan de collage avec un adhésif à base de polymères et/ou de copolymères composés de caoutchouc de synthèse et/ou de caoutchouc naturel.

11. Ensemble composé d'une solution selon l'une quelconque des revendications 1 à 3 et d'une feuille adhésive pour la fixation d'un objet, la feuille adhésive, comportant un adhésif à base de polymères et/ou de copolymères composés de caoutchouc de synthèse et/ou de caoutchouc naturel, étant à nouveau détachable sans dommage en tirant dans la direction du plan de collage.
